# EUROPEAN PATENT SPECIFICATION

(11) **EP 4 333 105 B1**
(45) Date of publication and mention of the grant of the patent: **18.11.2026**
(21) Application number: 22878837.8
(22) Date of filing: 30.09.2022
(51) Int. Cl.: H01M 4/131, H01M 4/134, H01M 4/48, H01M 4/38, H01M 10/052, H01M 4/02, H01M 4/04, H01M 4/62, H01M 4/1395, H01M 4/36

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**
NEGATIVELEKTRODE FÜR LITHIUMSEKUNDÄRBATTERIE, VERFAHREN ZUR HERSTELLUNG EINER NEGATIVELEKTRODE FÜR LITHIUMSEKUNDÄRBATTERIE UND LITHIUMSEKUNDÄRBATTERIE MIT NEGATIVELEKTRODE
ÉLECTRODE NÉGATIVE POUR BATTERIE SECONDAIRE AU LITHIUM, PROCÉDÉ DE FABRICATION D'ÉLECTRODE NÉGATIVE POUR BATTERIE SECONDAIRE AU LITHIUM, ET BATTERIE SECONDAIRE AU LITHIUM COMPRENANT UNE ÉLECTRODE NÉGATIVE

(30) Priority: 05.10.2021 KR 20210131933
(43) Date of publication of application: 06.03.2024
(73) Proprietor: LG Energy Solution, Ltd., Seoul 07335 (KR)
(72) Inventor: LEE, Jaewook, Daejeon 34122 (KR); PARK, Su Jin, Daejeon 34122 (KR); JUN, Chan Soo, Daejeon 34122 (KR)
(74) Representative: Hoffmann Eitle
(86) International application number: PCT/KR2022/014849
(87) International publication number: WO 2023/059016

(56) References cited:
- EP-A1- 3 886 218
- JP-A- 2016 181 487
- KR-A- 20130 018 498
- KR-A- 20170 109 293
- KR-A- 20170 135 425
- KR-A- 20190 130 851
- KR-A- 20210 030 142

## Description

### [Technical Field]

This application claims priority to and the benefit of Korean Patent Application No. 10-2021-131933filed in the Korean Intellectual Property Office on October 5, 2021.

The present application relates to a negative electrode for a lithium secondary battery, a method for preparing a negative electrode for a lithium secondary battery, and a lithium secondary battery including the negative electrode.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, as the demand for high-density energy batteries has been recently increased, studies have been actively conducted on a method of increasing the capacity using a silicon-based compound such as Si/C or SiOx, which has a capacity 10-fold or higher than that of a graphite-based material as a negative electrode active material, but a silicon-based compound, which is a high-capacity material, has a higher capacity than graphite used in the related art, but has a problem in that the volume rapidly expands in the charging process to disconnect the conductive path, resulting in deterioration in battery characteristics.

Thus, to solve problems when the silicon-based compound is used as a negative electrode active material, measures to adjust the driving potential, additionally, measures to suppress the volume expansion itself such as methods of coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate due to the measures, so that there is still a limitation in the commercialization of preparation of a battery having a negative electrode with a high content of the silicon-based compound.

Furthermore, when a negative electrode is manufactured using a silicon-based active material, it is important for the pore structure of the negative electrode to be simple, and it is known that it is advantageous to increase the size of the particles of the silicon-based active material included for this purpose. However, swelling during charging/discharging is large due to the characteristics of the silicon-based active material, and it has been confirmed through research that there is a problem in that the larger the particle size, the greater the displacement of the volume change, and the larger the particle size, the smaller the surface contacting the negative electrode current collector layer, so that an electrode detachment phenomenon occurs.

Therefore, there is a need for research on a silicon-based active material layer capable of simplifying the pore structure of a negative electrode and preventing the conductive path from being damaged according to the volume expansion of the silicon-based compound even when the silicon-based compound is used as an active material in order to improve the capacity performance.

### <Related Art Documents>

Japanese Patent Application Laid-Open No. 2009-080971, KR10-2017 0135425A, EP3886218A1, and JP2016181487A

### [Detailed Description of the Invention]

### [Technical Problem]

Although it has been discussed that a silicon-based active material is applied to a negative electrode due to excellent capacity characteristics as described above, the pore structure of the negative electrode according to the size of the active material itself is complicated, and the use thereof is limited due to problems such as volume expansion caused by charging and discharging. However, it was confirmed that even when the silicon-based active material is applied to the negative electrode, the negative electrode pore structure can be simplified and the electrode detachment phenomenon due to charging and discharging can be prevented when the silicon-based active material is disposed in a specific region by adjusting the central particle size (D50) value of the silicon-based active material.

Accordingly, the present application has been made in an effort to provide a negative electrode for a lithium secondary battery, which has the aforementioned characteristics, a method for manufacturing a negative electrode for a lithium secondary battery, and a lithium secondary battery including the negative electrode.

### [Technical Solution]

The present invention is a negative electrode according to claim 1, a method for preparing such an electrode according to independent method claim 9, and a lithium secondary battery according to claim 11 comprising the negative electrode for a lithium secondary battery of any one of claims 1 to 8. Preferred embodiments are defined in the dependent claims.

### [Advantageous Effects]

In the case of a negative electrode for a lithium secondary battery according to the present invention, a silicon-based active material, which is a high-capacity material, is used to manufacture a high-capacity battery. The silicon-based active material is disposed by adjusting the average particle diameter (D50) of the silicon-based active material, and it is characterized in that the negative electrode active material layer includes a lower layer portion including a surface facing the negative electrode current collector layer and an upper layer portion including a surface opposite to the surface facing the negative electrode current collector layer, and the average particle diameter (D50) of the silicon-based active material included in the lower layer portion is smaller than the average particle diameter (D50) of the silicon-based active material included in the upper layer portion. In particular, the silicon-based active material included in the lower layer portion has an average particle diameter (D50) of 1 µm to 6 µm, and the silicon-based active material included in the upper layer portion has an average particle diameter (D50) of 7 µm to 15 µm.

Accordingly, since a silicon-based active material having a relatively small average particle diameter is distributed near the negative electrode current collector, the volume expansion of the active material is small even during charging and discharging, so that the electrode detachment phenomenon can be prevented and the electrode pore structure is simplified by disposing a silicon-based active material having a relatively large average particle diameter in the upper layer portion, and accordingly, the present invention has a feature that the negative electrode resistance can be reduced.

That is, the present invention adjusts the disposition in a negative electrode active material layer according to the average particle diameter of the silicon-based active material, and is mainly characterized in that as the present invention has the aforementioned features, the high-capacity characteristics which are the advantages of a negative electrode including the silicon-based active material can be maintained, and simultaneously, the service life characteristics can also be strengthened by preventing the detachment phenomenon of the electrode and preventing an increase in resistance.

### [Brief Description of Drawings]

FIG. 1 is a view illustrating the stacking structure of a negative electrode for a lithium secondary battery according to an exemplary embodiment of the present invention.
FIG. 2 is a view illustrating the stacking structure of a lithium secondary battery according to an exemplary embodiment of the present invention.

### <Explanation of Reference Numerals and Symbols>

1-1: Lower layer portion
1-2: Upper layer portion
10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the particle diameter distribution, and means the particle diameter at the n% point of the cumulative distribution of the number of particles according to the particle diameter. That is, D50 is the particle diameter (average particle diameter, median particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the distribution of the particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention.

The present invention is a negative electrode for a lithium battery according to independent claim 1.

The present invention adjusts the disposition of a negative electrode active material layer according to the average particle diameter of the silicon-based active material, and, since the present invention has the aforementioned features, it has a main object that can maintain the high-capacity characteristics which are the advantages of a negative electrode including the silicon-based active material, and simultaneously, can also strengthen the service life characteristics by preventing the detachment phenomenon of the electrode.

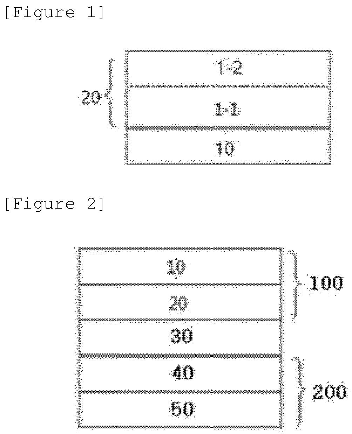

FIG. 1 is a view illustrating the stacking structure of a negative electrode for a lithium secondary battery according to an exemplary embodiment of the present invention. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

Specifically, it can be confirmed that on the negative electrode active material layer, a lower layer portion 1-1 including a surface facing the negative electrode current collector layer and an upper layer portion 1-2 including a surface opposite to the surface facing the negative electrode current collector layer are formed.

In this case, the thicknesses of the upper layer portion and the lower layer portion may be the same, and may also be different.

In an exemplary embodiment of the present invention , provided is a negative electrode for a lithium secondary battery, in which the silicon-based particle includes one or more selected from the group consisting of SiOx (x=0), SiOx (0<x<2), SiC, and a Si alloy.

In an exemplary embodiment of the present invention, provided is a negative electrode for a lithium secondary battery, in which the silicon-based particle includes one or more selected from the group consisting of SiOx (x=0) and SiOx (0<x<2), and includes 70 parts by weight or more of the SiOx (x=0) based on 100 parts by weight of the silicon-based active material.

In an exemplary embodiment of the present invention, provided is a negative electrode composition in which the silicon-based particle includes SiOx (x=0), and includes 70 parts by weight or more of the SiOx (x=0) based on 100 parts by weight of the silicon-based active material.

In another exemplary embodiment, the SiOx (x=0) is included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present invention , for the silicon-based active material, particularly, pure silicon (Si) may be used as the silicon-based active material. The use of pure silicon (Si) as the silicon-based active material may mean that based on the total 100 parts by weight of the silicon-based active material as described above, pure silicon-based particles (SiOx (x=0)), which are not bound to other particles or elements, are included in the above range.

In an exemplary embodiment of the present invention, the silicon-based active material may be composed of silicon-based particles having 100 parts by weight of SiOx (x=0).

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

Therefore, the present invention has solved the existing problems through the distribution according to the average particle diameter of the silicon-based active material itself rather than adjusting the compositions of the conductive material and the binder in order to solve the aforementioned problems while using only the silicon-based active material as a negative electrode active material in order to improve the capacity performance.

In the present invention, the silicon-based active material includes silicon-based particles having a particle diameter distribution of 0.01 µm or more and 30 µm or less.

The fact that the silicon-based active material includes silicon-based particles having a particle diameter distribution of 0.01 µm or more and 30 µm or less means that a large number of individual silicon-based particles having a particle diameter within the above range are included, and the number of silicon-based particles to be included is not limited.

When the silicon-based particles is spherical, the particle diameter of the silicon-based particles may be expressed as the diameter thereof, but even in the case of other non-spherical shapes, the particle diameter may be measured compared to the case of the spherical shape, and in general, the particle diameter of individual silicon-based particles may be measured by a measurement method used in the art.

In an exemplary embodiment of the present application, the silicon-based active material generally has a characteristic BET specific surface area. The BET specific surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured by DIN 66131 (using nitrogen).

In an exemplary embodiment of the present application, the silicon-based active material may be present, for example, in a crystalline or amorphous form, and preferably is not porous. The silicon-based active material is preferably a spherical or fragment-shaped particle. Alternatively but less preferably, the silicon-based active material may also have a fibrous structure or be present in the form of a film or coating including silicon.

The present invention provides a negative electrode for a lithium secondary battery, in which the silicon-based active material is included in an amount of 60 parts by weight or more based on 100 parts by weight of the negative electrode composition.

The present invention provides, that the silicon-based active material is included in an amount of 60 parts by weight or more, preferably 65 parts by weight or more, and more preferably 70 parts by weight or more, and may be included in an amount of 95 parts by weight or less, preferably 90 parts by weight or less, and more preferably 85 parts by weight or less, based on 100 parts by weight of the negative electrode composition.

The negative electrode for a lithium secondary battery according to the present application has a feature in which by distributing a silicon-based active material having a specific average particle diameter, which can suppress the volume expansion rate in the charging and discharging process in the negative electrode even though a silicon-based active material having a remarkably high capacity is used in the above range, the performance of the negative electrode does not deteriorate and output characteristics at charging and discharging are excellent even though the above range is included.

In an exemplary embodiment of the present application, the silicon-based active material may have a non-spherical form, and the sphericity thereof is, for example, 0.9 or less, for example 0.7 to 0.9, for example, 0.8 to 0.9, and for example, 0.85 to 0.9.

In the present application, the sphericity is determined by the following Equation 1, where A is the area and P is the boundary line. [Equation 1] $4 πA / {P}^{2}$

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, even though characteristics of the silicon-based active material itself are adjusted as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a conductive material having conductivity in the form of a sphere or dot without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m²/g or more and 70 m²/g or less, preferably 45 m²/g or more and 65 m²/g or less, and more preferably 50 m²/g or more and 60 m²/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent.

In the manufacture of the dotted conductive material, a high functional group content may mean that there are a large amount of foreign materials, and a low functional group content may mean that more heat treatment process has been conducted, and the dotted conductive material according to the present application may satisfy the functional group content range by partially heat-treating the dotted conductive material in order to satisfy the functional group content within the above range.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the negative electrode conductive material may include a planar conductive material.

The planar conductive material means a conductive material which serves to increase the surface contact between silicon particles in the negative electrode to improve conductivity and simultaneously suppress the disconnection of the conductive path due to the volume expansion. The planar conductive material may be expressed as a plate-like conductive material or a bulk conductive material.

In an exemplary embodiment of the present invention, the planar conductive material includes at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 µm to 7 µm, specifically 3 µm to 6 µm, and more specifically 4 µm to 5 µm. When the average particle diameter satisfied the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 µm or more and 1.5 µm or less, a D50 of 4.0 µm or more and 5.0 µm or less, and a D90 of 7.0 µm or more and 15.0 µm or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 5 m²/g or more.

In another exemplary embodiment, the planar conductive material may have a BET specific surface area of 5 m²/g or more and 500 m²/g or less, preferably 5 m²/g or more and 300 m²/g or less, and more preferably 5 m²/g or more and 250 m²/g or less.

In still another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300 m²/g or less.

In yet another exemplary embodiment, the planar conductive material is a low specific surface area planar conductive material, and the BET specific surface area may satisfy a range of 5 m²/g or more and 40 m²/g or less, preferably 5 m²/g or more and 30 m²/g or less, and more preferably 5 m²/g or more and 25 m²/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in substantially the same orientation as a longitudinal axis of the carbon nanotube unit. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present invention, provided is a negative electrode composition in which the negative electrode conductive material includes a linear conductive material, and the linear conductive material is a carbon nanotube.

In an exemplary embodiment of the present invention, the negative electrode conductive material may include a planar conductive material; and a linear conductive material.

In an exemplary embodiment of the present application, the negative electrode conductive material includes a planar conductive material and a linear conductive material, and the ratio of the planar conductive material : the linear conductive material may satisfy 1:0.01 to 1:0.1.

In an exemplary embodiment of the present application, provided is a negative electrode composition, in which the negative electrode conductive material is included in an amount of 5 parts by weight or more and 40 parts by weight or less, based on 100 parts by weight of the negative electrode composition.

In another exemplary embodiment, the negative electrode conductive material may be included in an amount of 5 parts by weight or more and 40 parts by weight or less, preferably 10 parts by weight or more and 30 parts by weight or less, and more preferably 15 parts by weight or more and 25 parts by weight or less, based on 100 parts by weight of the negative electrode composition.

In an exemplary embodiment of the present application, as the negative electrode conductive material includes a planar conductive material and a linear conductive material and each satisfies the composition and ratio, the negative electrode conductive material has a feature in which output characteristics at high C-rate are excellent because the service life characteristics of the existing lithium secondary battery are not greatly affected and points where the battery can be charged and discharged are increased.

The negative electrode conductive material according to the present application has a completely different configuration from a conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as an existing negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 m²/g or more and 4.5 m²/g or less. In addition, plate-like graphite, which is a planar conductive material, is in a planar form, and may have a BET specific surface area of 5 m²/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various polymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 30 parts by weight or less, preferably 25 or less, and more preferably 20 parts by weight or less, and may be included in an amount of 5 parts by weight or more and 10 parts by weight or more, based on 100 parts by weight of the negative electrode composition.

The present invention provides a negative electrode for lithium battery according to claim 1, in which the negative electrode active material layer is a single-layered negative electrode active material layer, the silicon-based active material included in the lower layer portion has an average particle diameter (D50) of 1 µm to 6 µm, and the silicon-based active material included in the upper layer portion has an average particle diameter (D50) of 7 µm to 15 µm.

The silicon-based active material included in the lower layer portion has an average particle diameter (D50) of 1 µm to 6 µm, preferably 2 µm to 6 µm.

The silicon-based active material included in the upper layer portion has an average particle diameter (D50) of 7 µm to 15 µm, preferably 8 µm to 12 µm.

As described above, the upper layer portion and the lower layer portion are characterized by including a silicon-based active material satisfying a specific average particle diameter. The present invention has the features capable of strengthening the adhesion with the negative electrode current collector layer by satisfying the above range and capable of solving the resistance problem by simplifying the pore structure. That is, when the average particle diameter of the silicon-based active material included in the lower layer portion is less than the above range, there is a problem in that the silicon-based active material of over-small sizes may be included to increase the adhesion, but the resistance is not improved, and when the average particle diameter exceeds the above range, there is a problem in that service life characteristics deteriorate due to a decrease in adhesion. Furthermore, when the average particle diameter of the silicon-based active material included in the upper layer portion is less than the above range, there occurs a problem in that the resistance problem is not ameliorated, and when the average particle diameter exceeds the above range, the particle diameter of the silicon-based active material becomes too large, the volume expansion rate is aggravated, and thus there occurs a problem in that service life characteristics rather deteriorate.

The present invention provides a negative electrode for a lithium secondary battery according to claim 1.

That is, the negative electrode for a lithium secondary battery according to the present invention may include a single-layered negative electrode active material layer or a double-layered negative electrode active material layer, and includes a silicon-based active material having a larger average particle diameter in the upper layer portion of the negative electrode active material layer than in the lower layer portion of the negative electrode active material layer.

That is, as can be confirmed in FIG. 1, when a negative electrode active material layer 20 has a single layer, the upper layer portion 1-2 and the lower layer portion 1-1 may mean a negative electrode active material layer region in the single layer. Further, when the negative electrode active material layer 20 has a double layer, the negative electrode active material layer 10 may include a second active material layer including the upper layer portion 1-2 and a first active material layer including the lower layer portion 1-1.

In der present invention, the negative electrode active material layer is a single-layered negative electrode active material layer, and the negative electrode active material layer includes a lower layer portion including a surface facing the negative electrode current collector layer.

When the lower layer portion includes a surface facing the negative electrode current collector layer, the thickness range thereof is not limited, but the lower layer portion may have a thickness of 1% to 60%, preferably 20% to 50%, based on the thickness of the entire negative electrode active material layer.

In the present invention the negative electrode active material layer is a single-layered negative electrode active material layer, and the negative electrode active material layer includes an upper layer portion including a surface opposite to the surface facing the negative electrode current collector layer.

When the upper layer portion includes a surface opposite to the surface facing the negative electrode current collector layer, the thickness range thereof is not limited, but the upper layer portion may have a thickness of 20% to 80%, preferably 40% to 70%, based on the thickness of the entire negative electrode active material layer.

In an exemplary embodiment of the present application, provided is a negative electrode for a lithium secondary battery, in which the ratio of the thickness of the upper layer portion : the thickness of the lower layer portion is 4:1 to 1.5:1.

In another exemplary embodiment, the ratio of the thickness of the upper layer portion : the thickness of the lower layer portion may satisfy a range of 4:1 to 1.5:1, preferably 3.5:1 to 1.5:1, and more preferably 3:1 to 1.5:1.

In an exemplary embodiment of the present application, provided is a negative electrode for a lithium secondary battery, in which the negative electrode current collector layer has a thickness of 1 µm or more and 100 µm or less, the first negative electrode active material layer has a thickness of 10 µm or more and 250 µm or less, and the second negative electrode active material layer has a thickness of 10 µm or more and 250 µm or less.

However, the thickness may be variously modified depending on the type and use of the negative electrode used, and is not limited thereto.

In an exemplary embodiment of the present application, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine convex and concave irregularities on the surface thereof, and the negative electrode current collector layer may be used in various forms such as a film, a sheet, a foil, a net, a porous body, a foam body, and a non-woven fabric body.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The present invention is also a method for manufacturing a negative electrode for a lithium secondary battery according to independent claim 9.

In an exemplary embodiment of the present invention, the negative electrode for a lithium secondary battery may be formed by applying a first negative electrode active material layer slurry including the first negative electrode active material layer composition and a second negative electrode active material layer slurry including the second negative electrode active material layer composition on one surface or both surfaces of the negative electrode current collector layer and drying the slurries.

The first negative electrode active material layer slurry may include: the above-described first negative electrode active material layer composition; and a slurry solvent.

The second negative electrode active material layer slurry may include: the above-described second negative electrode active material layer composition; and a slurry solvent.

In an exemplary embodiment of the present application, the solid contents of the first and second negative electrode active material layer slurries may satisfy 5% or more and 40% or less.

In another exemplary embodiment, not forming part of the present invention, the solid contents of the first and second negative electrode active material layer slurries may satisfy a range of 5% or more and 40% or less, preferably 7% or more and 35% or less, and more preferably 10% or more and 30% or less.

The solid contents of the first and second negative electrode active material layer slurries may mean the content of the negative electrode composition contained in the negative electrode slurry, and may mean the content of the negative electrode composition based on 100 parts by weight of the negative electrode slurry.

When the solid contents of the first and second negative electrode active material layer slurries satisfy the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present invention, provided is a method for preparing a negative electrode for a lithium secondary battery, in which the forming of the second negative electrode active material layer on the first negative electrode active material layer includes a wet on dry process; or a wet on wet process.

In an exemplary embodiment of the present invention, the wet on dry process means a process of applying a first negative electrode active material layer composition (specifically, a first negative electrode active material layer slurry), and then applying a second negative electrode active material layer composition (specifically, a second negative electrode active material layer slurry) on the top thereof after completely drying the first negative electrode active material layer composition. Through the aforementioned process, the first negative electrode active material layer and the second negative electrode active material layer may have a clear boundary, and accordingly, the compositions contained in the first negative electrode active material layer and the second negative electrode active material layer are not mixed, and the negative electrode active material layer according to the present application may be composed of two layers.

In an exemplary embodiment of the present invention, the wet on wet process may mean a process of applying a first negative electrode active material layer composition (specifically, a first negative electrode active material layer slurry), and then applying a second negative electrode active material layer composition (specifically, a second negative electrode active material layer slurry) on the top thereof before completely drying the first negative electrode active material layer composition. Through the aforementioned process, the negative electrode active material layer may form a single-layered negative electrode active material layer having the first negative electrode active material layer composition and the second negative electrode active material layer composition. In this case, mixing may partially occur at the boundary between the first negative electrode active material layer composition and the second negative electrode active material layer composition, and in this case, the mixing at the boundary may be expressed as intermixing.

In the present invention, when the first negative electrode active material layer composition and the second negative electrode active material layer composition are formed as described above, a single-layered negative electrode active material layer or a double-layered negative electrode active material layer is formed according to process conditions.

In a preferred embodiment of the present invention, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present invention. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode includes a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0. 33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1- c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope of the accompanying claims.

### [Mode for Invention]

### <Preparation Examples>

### <Example 1>

### Preparation of first negative electrode active material layer slurry

A first negative electrode active material layer composition was formed using Si (average particle diameter (D50): 5 µm) as a silicon-based active material, a first conductive material, a second conductive material, and polyacrylamide as a binder at a weight ratio of 80:9.6:0.4:10, and added to distilled water as a solvent for forming a negative electrode slurry to prepare a first negative electrode slurry.

The first conductive material was plate-like graphite (specific surface area: 17 m²/g, average particle diameter (D50): 3.5 µm), and the second conductive material was SWCNT.

As a mixing method, the first conductive material, the second conductive material, the binder and water were dispersed at 2500 rpm for 30 minutes using a homo mixer, then an active material was added thereto, and then the resulting mixture was dispersed at 2500 rpm for 30 minutes, so as to prepare a first negative electrode active material layer slurry.

### Preparation of second negative electrode active material layer slurry

A second negative electrode active material layer composition was formed using Si (average particle diameter (D50): 9 µm) as a silicon-based active material, a first conductive material, a second conductive material, and polyacrylamide as a binder at a weight ratio of 80:9.6:0.4:10, and added to distilled water as a solvent for forming a negative electrode slurry to prepare a second negative electrode active material layer slurry.

Thereafter, both surfaces of a copper current collector (thickness: 8 µm) as a negative electrode current collector were coated with the first negative electrode active material layer slurry at a loading amount of 20 mg/25 cm², and simultaneously, the second negative electrode slurry was coated thereon at a loading amount of 80 mg/25 cm² by the wet on wet method and dried. In this case, the solid content of the first negative electrode slurry was 25%, and the solid content of the second negative electrode slurry was 28%.

Thereafter, the resulting coated current collector was roll pressed and dried at 130°C in a vacuum oven for 10 hours, thereby forming a single-layered negative electrode active material layer (thickness: 65 µm), which was used as a negative electrode.
(Thickness of the negative electrode: 73 µm, porosity of the negative electrode: 40%, average particle diameter (D50) of the lower layer portion silicon-based active material: 5 µm, and average particle diameter (D50) of the upper layer portion silicon-based active material: 9 µm)

### <Examples 2 to 10 and Comparative Examples 1 to 10>

A negative electrode was manufactured in the same manner as in Example 1, except that the average particle diameter and coating method of the silicon-based active material as shown in the following Table 1 were applied in Example 1.

**[Table 1]**

| | Average particle diameter (D50) of Si included in first negative electrode active material layer slurry (µm) | Average particle diameter (D50) of Si included in second negative electrode active material layer slurry (µm) | Coating method |
|---|---|---|---|
| Example 2 | 2 | 8 | wet on wet |
| Example 3 | 2 | 12 | wet on wet |
| Example 4 | 8 | 7 | wet on wet |
| Example 5 | 8 | 12 | wet on wet |
| Example 6 | 5 | 9 | wet on dry |
| Example 7 | 2 | 8 | wet on dry |
| Example 8 | 2 | 12 | wet on dry |
| Example 9 | 8 | 7 | wet on dry |
| Example 10 | 8 | 12 | wet on dry |
| Comparative Example 1 | 9 | 5 | wet on wet |
| Comparative Example 2 | 5 | 3 | wet on wet |
| Comparative Example 3 | 0.5 | 8 | wet on wet |
| Comparative Example 4 | 3 | 17 | wet on wet |
| Comparative Example 5 | 7 | 17 | wet on wet |
| Comparative Example 6 | 9 | 5 | wet on dry |
| Comparative Example 7 | 5 | 3 | wet on dry |
| Comparative Example 8 | 0.5 | 8 | wet on dry |
| Comparative Example 9 | 3 | 17 | wet on dry |
| Comparative Example 10 | 7 | 17 | wet on dry |

Examples 1 to 10 and Comparative Examples 1 to 10 are experiments based on the distribution of the average particle diameter of Si particles. Specifically, Examples 1 to 5 correspond to the results having a single-layered active material layer, and Examples 6 to 10 correspond to the results having a double-layered active material layer.

Since a silicon-based active material having a relatively small average particle diameter is distributed near the negative electrode current collector in the results of Examples 1 to 10, the volume expansion of the active material is small even during charging and discharging, so that the electrode detachment phenomenon can be prevented and the electrode pore structure is simplified by disposing a silicon-based active material having a relatively large average particle diameter in the upper layer portion, and accordingly, the present invention has a feature that the negative electrode resistance can be reduced.

That is, Examples 1 to 10 have similar overall pore resistance, but it could be confirmed that the difference in performance due to the size of the particles applied to the lower layer portion and the contact point with the negative electrode current collector are increased, and the life characteristics are also improved.

In the case of Comparative Examples 1 to 5, a single-layered active material layer was formed by performing a wet on wet process, but similar results are shown even though a wet on dry process is performed, so that Comparative Examples 6 to 10 are described as Comparative Examples 1 to 5. Specifically, Comparative Example 1 and Comparative Example 2 are the cases where the particle diameter of the lower layer portion is larger and the particle diameter of the upper layer portion is smaller, and showed the results that the service life performance deteriorated rapidly due to the aggravation of the electrode detachment phenomenon according to the increase in the absolute value of the lower layer portion volume change. In Comparative Example 3, the average particle diameter of the lower layer portion is kept smaller than that of the upper layer portion, but particles, in which the average particle diameter of the lower layer portion is too low, were used, and silicon-based active material of over-small sizes may be included in the lower layer portion to improve the service life performance, but it could be confirmed that the pore resistance rapidly increased due to the over-small sizes of the active material, and thus, the performance deteriorated.

Comparative Example 4 corresponds to the case where the average particle diameter of the lower layer portion is satisfied, but the average particle diameter of the upper layer portion exceeds the scope of the present application. In such a case, the detachment phenomenon from the negative electrode current collector layer may be prevented, but the upper layer also has a large particle size range, so that the volume expansion rate is increase, and in this case, the results, in which the service life performance rapidly deteriorated because the detachment phenomenon between the electrodes occurred, were exhibited.

Comparative Example 5 are the case where both the average particle diameter of the lower layer portion and the average particle diameter of the upper layer portion were not satisfied, and results similar to those of Comparative Examples 1 and 4 could be obtained.

That is, the present invention adjusts the disposition of a negative electrode active material layer according to the average particle diameter of the silicon-based active material, and it could be confirmed through the experiments that the present invention is mainly characterized in that as the present invention has the aforementioned features, the high-capacity characteristics which are the advantages of a negative electrode including the silicon-based active material can be maintained, and simultaneously, the service life characteristics can also be strengthened by preventing the detachment phenomenon of the electrode and preventing an increase in resistance.

### <Experiments of mixed active materials having different particle diameters>

A negative electrode active material layer composition was formed of an active material in which Si (average particle diameter (D50): 5 µm) as a silicon-based active material and Si (average particle diameter (D50): 9 µm) as a silicon-based active material were mixed at a ratio shown in the following Table 2, a first conductive material, a second conductive material, and polyacrylamide as a binder at a weight ratio of 80 : 9.6 : 0.4 : 10, and added to distilled water as a solvent for forming a negative electrode slurry to prepare a negative electrode slurry.

The first conductive material was plate-like graphite (specific surface area: 17 m²/g, average particle diameter (D50): 3.5 µm), and the second conductive material was SWCNT.

As a mixing method, the first conductive material, the second conductive material, the binder and water were dispersed at 2500 rpm for 30 minutes using a homo mixer, then an active material was added thereto, and then the resulting mixture was dispersed at 2500 rpm for 30 minutes, so as to prepare a negative electrode active material layer slurry.

After both surfaces of a copper current collector (thickness: 8 µm) as a negative electrode current collector were coated with the negative electrode active material layer slurry in a loading amount of 94 mg/25 cm², and the copper current collector was roll-pressed and dried in a vacuum oven at 130°C for 10 hours to form a single-layered negative electrode active material layer (thickness: 65 µm), which was employed as a negative electrode.

(Thickness of the negative electrode: 73 µm, porosity of the negative electrode: 40%)

**[Table 2]**

| | **Active material composition of mixed active material layers having different particle diameters** | **Ratio of mixed particle diameters** |
|---|---|---|
| Comparative Example 11 | Si (average particle diameter (D50): 5 µm) as silicon-based active material : Si(average particle diameter (D50): 9 µm) as silicon-based active material | 100:0 |
| Comparative Example 12 | | 80:20 |
| Comparative Example 13 | | 70:30 |
| Comparative Example 14 | | 60:40 |
| Comparative Example 15 | | 50:50 |
| Comparative Example 16 | | 40:60 |
| Comparative Example 17 | | 0:100 |

In Table 2, the ratio of mixed particle diameters means a weight ratio of Si (average particle diameter (D50): 5 µm) as a silicon-based active material and Si (average particle diameter (D50): 9 µm) as a silicon-based active material based on 100 parts by weight of the entire active material.

The pore resistance (R pore) was measured according to the mixing ratio of the negative electrode active materials according to Comparative Examples 11 to 17, and the results are shown in the following Table 3.

**[Table 3]**

| | Pore resistance |
|---|---|
| Comparative Example 11 | 7.32 |
| Comparative Example 12 | 6.08 |
| Comparative Example 13 | 6.15 |
| Comparative Example 14 | 5.16 |
| Comparative Example 15 | 5.37 |
| Comparative Example 16 | 5.41 |
| Comparative Example 17 | 4.39 |

As can be confirmed in Table 3, it was confirmed that the greater the ratio of large particles (D50) : 9 µm, the lower the pore resistance. That is, when the negative electrode active material is used by simply increasing the proportion of large particles, it is shown that the pore resistance due to lithium ion migration may be lowered, but when the negative electrode active material was used by infinitely increasing the proportion as in Comparative Example 17, the volume expansion of the silicon-based active material caused extremely poor service life performance, so that the negative electrode could not be used for the battery. Ultimately, it could be confirmed through Table 3 that the pore resistance value is not in a linear relationship with the improvement in service life performance.

That is, Comparative Examples 11 to 17 relate to the use of mixed active materials, and the negative electrode according to the present invention is mainly characterized in that the lower layer portion and the upper layer portion are each adjusted and disposed, such that the average particle diameter satisfies a specific range, in addition to being able to improve the pore resistance when active materials with simply different particle diameters are mixed and used.

Ultimately, the present invention adjusts the disposition in a negative electrode active material layer according to the average particle diameter of the silicon-based active material, and it could be confirmed through the experiments that the present invention is mainly characterized in that as the present invention has the aforementioned features, the high-capacity characteristics which are the advantages of a negative electrode including the silicon-based active material can be maintained, and simultaneously, the service life characteristics can also be strengthened by preventing the detachment phenomenon of the electrode and preventing an increase in resistance.

## Claims

1. A negative electrode for a lithium secondary battery, comprising:
a negative electrode current collector layer; and
a negative electrode active material layer provided on the negative electrode current collector layer,
wherein the negative electrode active material layer comprises a negative electrode composition comprising a silicon-based active material, a negative electrode conductive material, and a negative electrode binder, the silicon-based active material comprises silicon-based particles having a particle diameter distribution of 0.01 µm or more and 30 µm or less,
the negative electrode active material layer comprises a lower layer portion comprising a surface facing the negative electrode current collector layer and an upper layer portion comprising a surface opposite to the surface facing the negative electrode current collector layer,
the silicon-based active material comprised in the lower layer portion has an average particle diameter (D50) of 1 µm to 6 µm, the silicon-based active material comprised in the upper layer portion has an average particle diameter (D50) of 7 µm to 15 µm,
the average particle diameter (D50) of the silicon-based active material comprised in the lower layer portion is smaller than the average particle diameter (D50) of the silicon-based active material comprised in the upper layer portion,
the silicon-based active material is comprised in an amount of 60 parts by weight or more based on 100 parts by weight of the negative electrode composition, and
the average particle diameter (D50) is determined as described in the description.

2. The negative electrode of claim 1, wherein the negative electrode active material layer is a single-layered negative electrode active material layer.

3. The negative electrode of claim 1, wherein the negative electrode active material layer comprises: a first negative electrode active material layer; and a second negative electrode active material layer,
the first negative electrode active material layer comprises the lower layer portion,
the second negative electrode active material layer comprises the upper layer portion,
the silicon-based active material comprised in the first negative electrode active material layer has an average particle diameter (D50) of 1 µm to 6 µm, the silicon-based active material comprised in the second negative electrode active material layer has an average particle diameter (D50) of 7 µm to 15 µm, and
wherein the average particle diameter (D50) is determined as described in the description.

4. The negative electrode of claim 1, wherein the silicon-based particle comprises one or more selected from the group consisting of SiOx (x=0), SiOx (0<x<2), SiC, and a Si alloy.

5. The negative electrode of claim 1, wherein the silicon-based particle comprises one or more selected from the group consisting of SiOx (x=0) and SiOx (0<x<2), and comprises 70 parts by weight or more of the SiOx (x=0) based on 100 parts by weight of the silicon-based active material.

6. The negative electrode of claim 1, wherein the negative electrode conductive material comprises: a planar conductive material, wherein the planar conductive material is at least one selected from plate-like graphite, graphene, graphene oxide, and graphite flake; and a linear conductive material, wherein the linear conductive material is carbon nanotubes.

7. The negative electrode of claim 1, wherein a ratio of the thickness of the upper layer portion : the thickness of the lower layer portion is 4:1 to 1.5:1.

8. The negative electrode of claim 3, wherein the negative electrode current collector layer has a thickness of 1 µm or more and 100 µm or less,
the first negative electrode active material layer has a thickness of 10 µm or more and 250 µm or less, and
the second negative electrode active material layer has a thickness of 10 µm or more and 250 µm or less.

9. A method for preparing a negative electrode for a lithium secondary battery, the method comprising:
preparing a negative electrode current collector layer;
forming a first negative electrode active material layer by applying a first negative electrode active material layer composition to one surface or both surfaces of the negative electrode current collector layer; and
forming a second negative electrode active material layer by applying a second negative electrode active material layer composition to a surface opposite to a surface of the first negative electrode active material layer brought into contact with the negative electrode current collector layer,
wherein the first negative electrode active material layer composition and the second negative electrode active material layer composition comprise a negative electrode composition comprising a silicon-based active material, a negative electrode conductive material, and a negative electrode binder, the silicon-based active material comprises silicon-based particles having a distribution in a particle size range of 0.01 µm or more and 30 µm or less,
the silicon-based active material comprised in the first negative electrode active material layer composition has an average particle diameter (D50) of 1 µm to 6 µm, the silicon-based active material comprised in the second negative electrode active material layer composition has an average particle diameter (D50) of 7 µm to 15 µm, the silicon-based active material is comprised in an amount of 60 parts by weight or more based on 100 parts by weight of the negative electrode composition, and
the average particle diameter (D50) is determined as described in the description.

10. The method of claim 9, wherein the forming of the second negative electrode active material layer on the first negative electrode active material layer comprises a wet on dry process; or a wet on wet process.

11. A lithium secondary battery comprising:
a positive electrode;
the negative electrode for a lithium secondary battery of any one of claims 1 to 8;
a separator provided between the positive electrode and the negative electrode; and
an electrolyte.

## Patentansprüche

1. Negativelektrode für eine Lithium-Sekundärbatterie, umfassend:
eine Negativelektrode-Stromkollektorschicht; und
eine Negativelektrode-Aktivmaterialschicht, die auf der Negativelektrode-Stromkollektorschicht bereitgestellt ist,
wobei die Negativelektrode-Aktivmaterialschicht eine Negativelektrode-Zusammensetzung umfasst, die ein Aktivmaterial auf Siliziumbasis, ein leitfähiges Material der Negativelektrode und ein Negativelektrode-Bindemittel umfasst, das Aktivmaterial auf Siliziumbasis Partikel auf Siliziumbasis mit einer Partikeldurchmesserverteilung von 0,01 µm oder mehr und 30 µm oder weniger umfasst,
die Negativelektrode-Aktivmaterialschicht einen unteren Schichtabschnitt , der eine der Negativelektrode-Stromkollektorschicht zugewandte Oberfläche umfasst, und einen oberen Schichtabschnitt, der eine der der Negativelektrode-Stromkollektorschicht zugewandten Oberfläche gegenüberliegende Oberfläche umfasst, umfasst,
das in dem unteren Schichtabschnitt umfasste Aktivmaterial auf Siliziumbasis einen mittleren Partikeldurchmesser (D50) von 1 µm bis 6 µm aufweist, das in dem oberen Schichtabschnitt umfasste Aktivmaterial auf Siliziumbasis einen mittleren Partikeldurchmesser (D50) von 7 µm bis 15 µm aufweist,
der mittlere Partikeldurchmesser (D50) des in dem unteren Schichtabschnitt umfassten Aktivmaterials auf Siliziumbasis kleiner ist als der mittlere Partikeldurchmesser (D50) des in dem oberen Schichtabschnitt umfassten Aktivmaterials auf Siliziumbasis,
das Aktivmaterial auf Siliziumbasis in einer Menge von 60 Gewichtsteilen oder mehr, basierend auf 100 Gewichtsteilen der Negativelektrode-Zusammensetzung, umfasst ist, und
der mittlere Partikeldurchmesser (D50), wie in der Beschreibung beschrieben, bestimmt wird.

2. Negativelektrode nach Anspruch 1, wobei die Negativelektrode-Aktivmaterialschicht eine einlagige Negativelektrode-Aktivmaterialschicht ist.

3. Negativelektrode nach Anspruch 1, wobei die Negativelektrode-Aktivmaterialschicht umfasst: eine erste Negativelektrode-Aktivmaterialschicht; und eine zweite Negativelektrode-Aktivmaterialschicht,
wobei die erste Negativelektrode-Aktivmaterialschicht den unteren Schichtabschnitt umfasst,
die zweite Negativelektrode-Aktivmaterialschicht den oberen Schichtabschnitt umfasst,
das in der ersten Negativelektrode-Aktivmaterialschicht umfasste Aktivmaterial auf Siliziumbasis einen mittleren Partikeldurchmesser (D50) von 1 µm bis 6 µm aufweist, das in der zweiten Negativelektrode-Aktivmaterialschicht umfasste Aktivmaterial auf Siliziumbasis einen mittleren Partikeldurchmesser (D50) von 7 µm bis 15 µm aufweist, und
wobei der mittlere Partikeldurchmesser (D50) wie in der Beschreibung beschrieben bestimmt wird.

4. Negativelektrode nach Anspruch 1, wobei das Partikel auf Siliziumbasis eines oder mehrere ausgewählt aus der Gruppe, bestehend aus SiOx (x = 0), SiOx (0 < x < 2), SiC und einer Si-Legierung, umfasst.

5. Negativelektrode nach Anspruch 1, wobei das Partikel auf Siliziumbasis eines oder mehrere ausgewählt aus der Gruppe, bestehend aus SiOx (x = 0) und SiOx (0 < x < 2), umfasst und 70 Gewichtsteile oder mehr des SiOx (x = 0), basierend auf 100 Gewichtsteilen des Aktivmaterials auf Siliziumbasis, umfasst.

6. Negativelektrode nach Anspruch 1, wobei das leitfähige Material der Negativelektrode umfasst: ein planares leitfähiges Material, wobei das planare leitfähige Material mindestens eines ausgewählt aus plattenförmigem Graphit, Graphen, Graphenoxid und Graphitflocken ist; und ein lineares leitfähiges Material, wobei das lineare leitfähige Material Kohlenstoffnanoröhren sind.

7. Negativelektrode nach Anspruch 1, wobei ein Verhältnis der Dicke des oberen Schichtabschnitts zu der Dicke des unteren Schichtabschnitts 4 : 1 bis 1,5 : 1 beträgt.

8. Negativelektrode nach Anspruch 3, wobei die Negativelektrode-Stromkollektorschicht eine Dicke von 1 µm oder mehr und 100 µm oder weniger aufweist,
die erste Negativelektrode-Aktivmaterialschicht eine Dicke von 10 µm oder mehr und 250 µm oder weniger aufweist, und
die zweite Negativelektrode-Aktivmaterialschicht eine Dicke von 10 µm oder mehr und 250 µm oder weniger aufweist.

9. Verfahren zur Herstellung einer Negativelektrode für eine Lithium-Sekundärbatterie, wobei das Verfahren umfasst:
Herstellen einer Negativelektrode-Stromkollektorschicht;
Bilden einer ersten Negativelektrode-Aktivmaterialschicht durch Aufbringen einer ersten Negativelektrode-Aktivmaterialschicht-Zusammensetzung auf eine Oberfläche oder beide Oberflächen der Negativelektrode-Stromkollektorschicht; und
Bilden einer zweiten Negativelektrode-Aktivmaterialschicht durch Aufbringen einer zweiten Negativelektrode-Aktivmaterialschicht-Zusammensetzung auf eine Oberfläche, die derjenigen Oberfläche der ersten Negativelektrode-Aktivmaterialschicht gegenüberliegt, die mit der Negativelektrode-Stromkollektorschicht in Kontakt gebracht wurde,
wobei die erste Negativelektrode-Aktivmaterialschicht-Zusammensetzung und die zweite Negativelektrode-Aktivmaterialschicht-Zusammensetzung eine Negativelektrode-Zusammensetzung umfassen, die ein Aktivmaterial auf Siliziumbasis, ein leitfähiges Material der Negativelektrode und ein Negativelektrode-Bindemittel umfasst, das Aktivmaterial auf Siliziumbasis Partikel auf Siliziumbasis, aufweisend eine Partikelgrößenverteilung im Bereich von 0,01 µm oder mehr und 30 µm oder weniger, umfasst,
das in der ersten Negativelektrode-Aktivmaterialschicht-Zusammensetzung umfasste Aktivmaterial auf Siliziumbasis einen mittleren Partikeldurchmesser (D50) von 1 µm bis 6 µm aufweist, das in der zweiten Negativelektrode-Aktivmaterialschicht-Zusammensetzung umfasste Aktivmaterial auf Siliziumbasis einen mittleren Partikeldurchmesser (D50) von 7 µm bis 15 µm aufweist, das Aktivmaterial auf Siliziumbasis in einer Menge von 60 Gewichtsteilen oder mehr, basierend auf 100 Gewichtsteilen der Negativelektrode-Zusammensetzung, umfasst ist, und
der mittlere Partikeldurchmesser (D50), wie in der Beschreibung beschrieben, bestimmt wird.

10. Verfahren nach Anspruch 9, wobei das Bilden der zweiten Negativelektrode-Aktivmaterialschicht auf der ersten Negativelektrode-Aktivmaterialschicht ein Nass-auf-Trocken-Verfahren oder ein Nass-auf-Nass-Verfahren umfasst.

11. Lithium-Sekundärbatterie, umfassend:
eine Positivelektrode;
die Negativelektrode für eine Lithium-Sekundärbatterie nach einem der Ansprüche 1 bis 8;
einen zwischen der Positivelektrode und der Negativelektrode bereitgestellten Separator; und
einen Elektrolyten.

## Revendications

1. Électrode négative pour une batterie secondaire au lithium, comprenant :
une couche de collecteur de courant d'électrode négative ; et
une couche de matériau actif d'électrode négative disposée sur la couche de collecteur de courant d'électrode négative,
dans laquelle la couche de matériau actif d'électrode négative comprend une composition d'électrode négative comprenant un matériau actif à base de silicium, un matériau conducteur d'électrode négative et un liant d'électrode négative, le matériau actif à base de silicium comprend des particules à base de silicium présentant une distribution granulométrique de 0,01 µm ou plus et de 30 µm ou moins,
la couche de matériau actif d'électrode négative comprend une partie de couche inférieure comprenant une surface faisant face à la couche de collecteur de courant d'électrode négative et une partie de couche supérieure comprenant une surface opposée à la surface faisant face à la couche de collecteur de courant d'électrode négative,
le matériau actif à base de silicium compris dans la partie de couche inférieure présente un diamètre de particule moyen (D50) de 1 µm à 6 µm, le matériau actif à base de silicium compris dans la partie de couche supérieure présente un diamètre de particule moyen (D50) de 7 µm à 15 µm,
le diamètre de particule moyen (D50) du matériau actif à base de silicium compris dans la partie de couche inférieure est inférieur au diamètre de particule moyen (D50) du matériau actif à base de silicium compris dans la partie de couche supérieure,
le matériau actif à base de silicium est compris dans une quantité de 60 parties en poids ou plus sur la base de 100 parties en poids de la composition d'électrode négative, et
le diamètre de particule moyen (D50) est déterminé comme décrit dans la description.

2. Électrode négative selon la revendication 1, dans laquelle la couche de matériau actif d'électrode négative est une couche de matériau actif d'électrode négative monocouche.

3. Électrode négative selon la revendication 1, dans laquelle la couche de matériau actif d'électrode négative comprend : une première couche de matériau actif d'électrode négative ; et une deuxième couche de matériau actif d'électrode négative,
la première couche de matériau actif d'électrode négative comprend la partie de couche inférieure,
la deuxième couche de matériau actif d'électrode négative comprend la partie de couche supérieure,
le matériau actif à base de silicium compris dans la première couche de matériau actif d'électrode négative présente un diamètre de particule moyen (D50) de 1 µm à 6 µm, le matériau actif à base de silicium compris dans la deuxième couche de matériau actif d'électrode négative présente un diamètre de particule moyen (D50) de 7 µm à 15 µm, et
dans laquelle le diamètre de particule moyen (D50) est déterminé comme décrit dans la description.

4. Électrode négative selon la revendication 1, dans laquelle la particule à base de silicium comprend un ou plusieurs éléments choisis parmi le groupe consistant en SiOx (x=0), SiOx (0<x<2), SiC et un alliage de Si.

5. Électrode négative selon la revendication 1, dans laquelle la particule à base de silicium comprend un ou plusieurs éléments choisis parmi le groupe consistant en SiOx (x=0) et SiOx (0<x<2), et comprend 70 parties en poids ou plus de SiOx (x=0) sur la base de 100 parties en poids du matériau actif à base de silicium.

6. Électrode négative selon la revendication 1, dans laquelle le matériau conducteur d'électrode négative comprend : un matériau conducteur planaire, dans laquelle le matériau conducteur planaire est au moins un élément choisi parmi le graphite en forme de plaque, le graphène, l'oxyde de graphène et le graphite en paillettes ; et un matériau conducteur linéaire, dans laquelle le matériau conducteur linéaire est constitué de nanotubes de carbone.

7. Électrode négative selon la revendication 1, dans laquelle un rapport de l'épaisseur de la partie de couche supérieure à l'épaisseur de la partie de couche inférieure est de 4:1 à 1,5:1.

8. Électrode négative selon la revendication 3, dans laquelle la couche de collecteur de courant d'électrode négative présente une épaisseur de 1 µm ou plus et de 100 µm ou moins,
la première couche de matériau actif d'électrode négative présente une épaisseur de 10 µm ou plus et de 250 µm ou moins, et
la deuxième couche de matériau actif d'électrode négative présente une épaisseur de 10 µm ou plus et de 250 µm ou moins.

9. Procédé de préparation d'une électrode négative pour une batterie secondaire au lithium, le procédé comprenant :
préparer une couche de collecteur de courant d'électrode négative ;
former une première couche de matériau actif d'électrode négative par l'application d'une composition de première couche de matériau actif d'électrode négative sur une surface ou les deux surfaces de la couche de collecteur de courant d'électrode négative ; et
former une deuxième couche de matériau actif d'électrode négative par l'application d'une composition de deuxième couche de matériau actif d'électrode négative sur une surface opposée à une surface de la première couche de matériau actif d'électrode négative amenée en contact avec la couche de collecteur de courant d'électrode négative,
dans lequel la composition de première couche de matériau actif d'électrode négative et la composition de deuxième couche de matériau actif d'électrode négative comprennent une composition d'électrode négative comprenant un matériau actif à base de silicium, un matériau conducteur d'électrode négative et un liant d'électrode négative, le matériau actif à base de silicium comprend des particules à base de silicium présentant une distribution dans une plage granulométrique de 0,01 µm ou plus et de 30 µm ou moins,
le matériau actif à base de silicium compris dans la composition de première couche de matériau actif d'électrode négative présente un diamètre de particule moyen (D50) de 1 µm à 6 µm, le matériau actif à base de silicium compris dans la composition de deuxième couche de matériau actif d'électrode négative présente un diamètre de particule moyen (D50) de 7 µm à 15 µm, le matériau actif à base de silicium est compris dans une quantité de 60 parties en poids ou plus sur la base de 100 parties en poids de la composition d'électrode négative, et
le diamètre de particule moyen (D50) est déterminé comme décrit dans la description.

10. Procédé selon la revendication 9, dans lequel la formation de la deuxième couche de matériau actif d'électrode négative sur la première couche de matériau actif d'électrode négative comprend un processus humide sur sec ; ou un processus humide sur humide.

11. Batterie secondaire au lithium comprenant :
une électrode positive ;
l'électrode négative pour une batterie secondaire au lithium selon l'une quelconque des revendications 1 à 8 ;
un séparateur disposé entre l'électrode positive et l'électrode négative ; et
un électrolyte.
